# EUROPÄISCHE PATENTSCHRIFT

(11) **EP 0 561 978 B1**
(45) Veröffentlichungstag und Bekanntmachung des Hinweises auf die Patenterteilung: **09.04.1997**
(21) Anmeldenummer: 92902001.4
(22) Anmeldetag: 12.12.1991
(51) Int. Cl.: C04B 28/26

(54) **VERFAHREN ZUR HERSTELLUNG VON FEINPORIGEM SCHAUM AUS IM WESENTLICHEN ANORGANISCHEN BESTANDTEILEN**
PROCESS FOR PRODUCING MICROPOROUS FOAM COMPOSED OF ESSENTIALLY ANORGANIC ELEMENTS
PROCEDE DE PRODUCTION DE MOUSSE A MICROPORES A BASE D'ELEMENTS ESSENTIELLEMENT ANORGANIQUES

(30) Priorität: 15.12.1990 DE 4040180
(43) Veröffentlichungstag der Anmeldung: 29.09.1993
(73) Patentinhaber: HT TROPLAST AG, D-53839 Troisdorf (DE)
(72) Erfinder: MEYER, Frank, D-4300 Essen 15 (DE); RANDEL, Peter, D-4018 Langenfeld (DE); RIECKS, Birgit, D-4250 Bottrop (DE)
(86) Internationale Anmeldenummer: EP9102387
(87) Internationale Veröffentlichungsnummer: WO9210440

(56) Entgegenhaltungen:
- EP-A- 0 148 280
- EP-A- 0 324 968
- EP-A- 0 417 582
- CHEMICAL ABSTRACTS, vol. 102, no. 8, 25. Februar 1985, Columbus, Ohio, US; abstract no. 66512Z, page 278
- WORLD PATENTS INDEX Week 7648, Derwent Publications Ltd., London, GB; AN 76- 89324X & JP-A-50084623

## Beschreibung

### Technisches Gebiet

Die Erfindung betrifft eine Formmasse - bzw. die aus mehreren Teilen bestehende Zusammenstellung der Komponenten - zur Herstellung eines festen Schaumprodukts entsprechend dem Oberbegriff des Anspruchs 1, das Verfahren zur Herstellung eines feinporigen, festen Schaumprodukts sowie das nach diesem Verfahren hergestellte feinporige Schaumprodukt.

### Stand der Technik

Aus der EP-B1 0 148 280 (= US-A 4,533,393) sind Schaumstoffe mit weitgehend geschlossenen Poren aus wasserhaltigen, härtbaren anorganischen Formmassen bekannt. Die Formmasse enthält eine Alkalisilikatlösung, Füllstoffe, Schäummittel und einen mit der Alkalisilikatlösung reaktionsfähigen Feststoff, der als wenigstens teilweise amorphes, pulverförmiges Alumosilikat mit Gehalten vdn amorphem Siliziumdioxid und Aluminiumoxid z. B. bei der Herstellung von Elektrokorund als Ofenfilterstaub anfällt.

Nach der EP-B1 0 199 941 (= US-A 4,681,631) können als weitere reaktionsfähige Feststoffe auch eine glasartig amorphe Elektrofilterasche mit 45 bis 60 Gew.-% SiO₂-Glas, 25 bis 35 Gew.-% Al₂O₃ neben Eisenoxid sowie gemahlener kalzinierter Bauxit verwendet werden, wobei die Elektrofilterasche aus Hochtemperatur-Steinkohlekraftwerken stammt. Auch Elektrofilterasche aus modernen Braunkohlekraftwerken (DE-OS 39 30 502) ist als reaktionsfähiger Feststoff brauchbar sowie Metakaolin nach der FR-PS 2 512 805 und FR-PS 2 512 806, wobei dem Metakaolin ggf. Portlandzement zugesetzt sein kann.

Aus der EP-A1 0 324 968 (= WO 89/05783) ist eine Formmasse zur Herstellung eines anorganischen, weitgehend geschlossenporigen Schaumprodukts bekannt, die durch Zusatz bestimmter Reaktionsbeschleuniger in kurzer Zeit aufschäumt und aushärtet. Als anorganische, steinbildende Komponente werden Oxidgemische mit Gehalten von amorphem SiO₂ und Aluminiumoxid, glasartig amorphe Elektrofilterasche, kalzinierter Bauxit oder ungelöstes amorphes SiO₂ aus einer amorphen, dispers-pulverförmigen Kieselsäure verwendet. Der Härter besteht aus einer wäßrigen Lösung von Alkalisilikaten.

Die eingangs genannten reaktionsfähigen Feststoffe reagieren - meist unter Selbsterwärmung - mit Alkalisilikatlösungen, wodurch die Bildung von festen Formkörpern innerhalb kurzer Zeit ausgelöst wird.

Die nach dem genannten Stand der Technik erzeugten Schaumstoffe sind in der Regel überwiegend geschlossenporig. Gemäß der nicht vorveröffentlichten EP 0 417 582 A2 und der DE 39 30 501 A1 können aber durch Zusatz von teilweise alkalilöslichen Eiweißverbindungen auch offenporige Schaumstoffkörper hergestellt werden.

Bei den bisher bekannt gewordenen Formmassen beobachtet man bei Zugabe von zu großen Mengen des Schäummittels ein Kollabieren des Schaumes vor der Aushärtung, so daß besonders leichte Schäume mit ausreichender Festigkeit nicht hergestellt werden können. Weiterhin weisen diese Schäume z.T. relativ große Poren und eine für bestimmte Anwendungen ungenügendes Verhältnis von Festigkeit zu Raumgewicht auf.

### Aufgabe

Aufgabe der vorliegenden Erfindung ist es daher, eine gattungsgemäße Formmasse - bzw. Zusammenstellung der Komponenten zu deren Herstellung - zur Verfügung zu stellen, die zu leichten Schäumen mit hoher Festigkeit und feiner Porenstruktur führt. Insbesondere soll das Verhältnis aus Festigkeit zur Dichte (Raumgewicht) verbessert werden. Ein weiteres Anliegen der Erfindung ist es, Formmassen und Verfahren zur Herstellung besonders leichter Schaumkörper zur Verfügung zu stellen.

### Darstellung der Erfindung

Die Erfindung löst diese Aufgabe durch die Merkmale der unabhängigen Ansprüche, bevorzugt in Verbindung mit einem oder mehreren Merkmalen der Unteransprüche. Wesentliches Merkmal ist dabei der Zusatz einer oberflächenaktiven, amphiphilen Substanz in einer zur Beeinflussung der Porenstruktur und/oder Festigkeit ausreichenden Menge, bevorzugt in Mengen von 0,1 - 5 Gew.-%, insbesondere 0,2 - 1 Gew.-%, jeweils bezogen auf die gesamte Formmasse.

Unter "Zusammenstellung" im Sinne der Erfindung wird die Summe der noch nicht (vollständig) vermischten Komponenten der Formmasse verstanden.

Als oberflächenaktive, amphiphile Substanzen können gebräuchliche Emulgatoren und Tenside eingesetzt werden, soweit sie im alkalischen Bereich stabil sind. Beispiele hierfür sind Alkylpolyethylenglykolether (MARLIPAL ^{R} 1618/25), Oxoalkohol (MARLIPAL ^{R} 013/70), Natriumalkylbenzolsulfonat (MARLON ^{R} A350), Fettalkohol-(C₁₂ -C₁₄)polyethylenglykol-(2EO)ethersulfat-Natriumsalz (MARLINAT ^{R} 242/70). Als besonders wirksam haben sich jedoch Salze von mehrwertigen Metallen und Fettsäuren, insbesondere Stearate wie Zink-, Magnesium-, Kalzium- und Aluminiumstearat erwiesen, von denen besonders Kalzium- und Aluminiumstearat wegen ihrer guten Handhabbarkeit und Wirksamkeit bevorzugt werden.

Als anorganische steinbildende Komponente wird erfindungsgemäß ein mit einer Alkalisilikatlösung in exothermer, anorganischer Reaktion aushärtender Feststoff eingesetzt. Nicht geeignet im Sinne der Erfindung sind dabei Zement und ähnliche Stoffe, die mit Wasser reagieren und mit dem erfindungsgemäßen Härter in einer sog. Puzzolan-Reaktion reagieren. Bevorzugt wird ein reaktiver Feststoff oder ein Feststoffgemisch aus der Gruppe
I feinteiliges, wenigstens teilweise amorphes Alumosilikat mit Gehalten von amorphem Siliziumdioxid und Aluminiumoxid,
II glasartige, amorphe Elektrofilterasche,
III gemahlener, kalzinierter Bauxit
IV Elektrofilterasche aus Braunkohlekraftwerken,
V ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
VI Metakaolin.

Bei diesen reaktiven Feststoffen wird durch den Einsatz der amphiphilen oberflächenaktiven Substanzen eine besonders signifikante Erhöhung der relativen, d. h. auf die Dichte bezogenen Festigkeit erreicht.

Als wasserhaltige zweite Komponente (Härter), der die Reaktion mit der steinbildenden ersten Komponente im alkalischen Bereich bewirkt, wird bevorzugt eine Alkalisilikatlösung mit 1,2 bis 2,5 Mol SiO₂ je Mol K₂O und/oder Na₂O eingesetzt. In den Alkalisilikatlösungen ist K₂O gegenüber Na₂O bevorzugt. Die Alkalisilikatlösungen sollen Alkali im Überschuß enthalten ("alkalische Alkalisilikatlösung"). Solche Alkalisilikatlösungen können durch Auflösen von amorpher, dispers-pulverförmiger, wasserhaltiger Kieselsäure, der sogenannten gefällten Kieselsäure, erzeugt werden. Dabei wird bevorzugt eine Lösung der Alkalihydroxide oder festes Alkalihydroxid unter Zusatz von Wasser mit der gefällten Kieselsäure zur Reaktion gebracht. Anstelle der gefällten Kieselsäure kann auch amorphes SiO₂ aus Hochtemperaturprozessen (Silica Fume) verwendet werden.

Besonders bevorzugt wird eine Mischung aus einer Kali- oder Natronwasserglaslösung und ca. 50 Gew.-%-iger Kalilauge, wobei wasserarme Mischungen anzustreben sind. Ein solcher Härter wird von der Firma Hüls Troisdorf AG unter der Bezeichnung TROLIT ^{R} Härter vertrieben.

Die erfindungsgemäße Formmasse enthält bevorzugt zusätzlich Füllstoffe wie Flugasche, Blähton, Perlit, Glimmer, Quarzmehl, Basaltmehl, Talkum, Foamglas oder dergleichen, bzw. deren Mischungen, bevorzugt in Mengen von bis zu 75 Gew.-%, insbesondere von 4 - 40 Gew.-%, bezogen auf den Gesamtansatz, bzw. bis zu 300 Gew.-Teilen, insbesondere von 5-100 Gew.-Teilen je 100 Gew.-Teile der steinbildenden Komponente.

Soweit organische Bestandteile im Endprodukt nicht störend sind, können auch Kunstharze zugesetzt werden, um die mechanischen Eigenschaften insbesondere von besonders leichten Schäumen zu verbessern.

Die steinbildende Komponente wird bevorzugt in einer Menge von 0,4-4 Gew.-Teile je Gew.-Teil der Alkalisilikatlösung eingesetzt.

Die Verschäumungsmittel und deren Mengen sind aus dem Stand der Technik bekannt, wobei einerseits Peroxide, vorzugsweise Wasserstoffperoxid in wäßriger Lösung, Natriumperborat und ggf. weitere Peroxide bzw. bei Zersetzung Sauerstoff oder andere Gase abgebende Mittel in vergleichsweise großen Mengen möglich sind und andererseits durch Alkali zersetzbares Metallpulver, wie insbesondere Aluminium, in vergleichsweise kleinen Mengen zugesetzt werden kann. Wasserstoffperoxid wird bevorzugt als etwa 10 Gew.-%-ige wäßrige Lösung in Mengen bis ca. 7 Gew.-%, bezogen auf die Formmasse, eingesetzt. Die zur Erzielung eines gewünschten Raumgewichtes benötigten Mengen an Verschäumungsmittel können durch einfache Versuche ermittelt werden, wobei zu beachten ist, daß der Schaum nicht kollabiert.

Wird ein Feststoff als Verschäumungsmittel eingesetzt, insbesondere Aluminiumpulver, wird es im trockenen Zustand unter den reaktionsfähigen Feststoff gemischt. Beim Einsatz von H₂O₂ als Verschäumungsmittel wird dieses jedoch erst als letzte Komponente zugegeben.

Durch Zusatz der aus der DE-OS 39 30 501 bekannten organischen Verbindungen, die im alkalischen Bereich nicht beständig sind, lassen sich besonders leichte, offen- und feinporige Schaumstoffkörper mit Dichten bis unter 100 kg/m³ herstellen.

Durch die erfindungsgemäßen Formmassen ist erstmals die Herstellung besonders leichter anorganischer Schäume mit Dichten auch unter 100 kg/m³, insbesondere unter 200 kg/m³, mit relativ hoher Festigkeit, insbesondere einer relativen Druckfestigkeit > 0,55 Nm/g, und einer mittleren Porengröße < 1,5 mm möglich. Die erfindungsgemäßen Schäume weisen weiterhin eine besonders feine Porenstruktur und ein überlegenes Warmedämmvermögen auf. Durch die sehr hohe Temperaturbelastbarkeit bis über 1200 °C - kurzzeitig bis 1500 °C - sind sie als Brandschutzmaterialien prädestiniert.

### Bester Weg zur Ausführung der Erfindung und Vergleichsversuche

### Beispiele 1-14

Als Feststoff wurde ein Gemisch aus

| | |
|---|---|
| 63 Gew.-% | eines amorphen, pulverförmigen Oxidgemisches mit Gehalten von amorphem Siliziumdioxid und Aluminiumoxid (Alumosilikat), wie er als Ofenfilterstaub bei der Herstellung von Elektrokorund anfällt (steinbildende Komponente), |
| 13 Gew.-% | Glimmer |
| 20 Gew.-% | Talkum |
| 2 Gew.-% | Glasfasern und |
| 2 Gew.-% | Farbstoff eingesetzt. |

Diese Feststoffmischung ist unter der Bezeichnung "TROLIT ^{R} Feststoff" von der Firma Hüls Troisdorf AG zu beziehen.

Der Härter (TROLIT ^{R} Härter) besteht aus

| | |
|---|---|
| 70 Gew.-% | Natronwasserglaslösung 40/42° Baumé und |
| 30 Gew.-% | 50 %-ige Kalilauge. |

Die in der Tabelle angegebenen Versuche werden jeweils mit gleichen Mengen Feststoff und Härter durchgeführt, wobei der Anteil des Schäummittels (10 Gew.-%-iges H₂O₂) und die amphiphile Substanz (Al-Stearat bzw. Ca-Stearat) variiert wurden. Gemessen wurde bei jeder Probe nach vollständiger Aushärtung die Dichte und die Druckfestigkeit nach DIN 53241, woraus die relative Druckfestigkeit bestimmt wurde. Die Versuche 3, 6, 9 und 12 stellen Vergleichsversuche dar.

Insbesondere die Proben mit Ca-Stearat wiesen bei gleicher Menge Schäummittel deutlich geringere Dichten bei gleichzeitig verbesserter Druckfestigkeit auf. Bei den Proben mit Al-Stearat wurde besonders die Druckfestigkeit verbessert. Von besonderer Bedeutung ist die verbesserte relative Druckfestigkeit (Druckfestigkeit/Dichte) bei allen erfindungsgemäßen Proben sowie die Möglichkeit, auch Schaumkörper mit besonders geringer Dichte herzustellen (Proben 13 und 14).

### Beispiel 15

Für dieses Beispiel wurde als Feststoff ein Gemisch aus

| | |
|---|---|
| 65 Gew.-% | eines amorphen, pulverförmigen Oxidgemisches mit Gehalten von amorphem Siliziumdioxid und Aluminiumoxid (Alumosilikat), wie er als Ofenfilterstaub bei der Herstellung von Elektrokorund anfällt (steinbildende Komponente), |
| 14 Gew.-% | Glimmer und |
| 21 Gew.-% | Talkum eingesetzt (TROLIT ^{R} Feststoff). |

Der Härter (TROLIT ^{R} Härter) bestand aus

| | |
|---|---|
| 70 Gew.-% | Natronwasserglaslösung 40/42° Baumé und |
| 30 Gew.-% | 50 %-ige Kalilauge. |

Mit einem Handmischer wurden zunächst 520 g Feststoff, 19,6 g Glasfasern (6 mm Länge) und 9,8 g Alkylpolyethylenglykolether (MARLIPAL ^{R} 1618/25) als amphiphile Substanz innig gemischt. Anschließend wurden 420 g des Härters zugegeben und mit dem Feststoff zu einer homogenen Suspension verarbeitet. Zum Schluß wurden 40 g 10 Gew.-%-iges H₂O₂ als Schaumbildner eingerührt. Nach ca. 10 s begann die Aufschäumung durch Zersetzung des H₂O₂. Nach 10 min. war die Aufschäumung abgeschlossen, wobei sich die Formmasse durch die Zersetzungsreaktion des H₂O₂ auf ca. 40 °C erwärmt hatte. Hierdurch wurde die exotherme Reaktion zwischen Feststoff und Härter gestartet. Nach insgesamt 60 min. war der Schaumstoff fest und erreichte nach ca. 2 h 80 % seiner Endfestigkeit. Die Probe wurde noch 4 Tage bei Raumtemperatur vollständig getrocknet und anschließend mit folgenden Werten ausgemessen:

| | |
|---|---|
| Dichte : | 519 [kg/m³] |
| Druckfestigkeit nach DIN 53 421 : | 2,28 [N/mm²] |
| mittlerer Porendurchmesser : | 0,9 [mm] |

### Beispiel 16

Es wurde wie in Beispiel 15 ein Schaumstoffkörper hergestellt, wobei jedoch als amphiphile Substanz 9,8 g 1-Methyl-2-alkyl-3-alkylamido-ethylimidazolinium-methosulfat (MARLOSOFT ^{R} IQ 75) eingesetzt wurde. Als physikalische Werte wurden ermittelt:

| | |
|---|---|
| Dichte : | 492 [kg/m³] |
| Druckfestigkeit nach DIN 53 421 : | 2,52 [N/mm²] |
| mittlerer Porendurchmesser : | 0,75 [mm] |

### Vergleichsbeispiel 17

Es wurde wie in Beispiel 15 ein Schaumstoffkörper hergestellt, wobei jedoch keine amphiphile Substanz zugegeben wurde. Als physikalische Werte wurden ermittelt:

| | |
|---|---|
| Dichte : | 533 [kg/m³] |
| Druckfestigkeit nach DIN 53 421 : | 1,2 [N/mm²] |
| mittlerer Porendurchmesser : | 3 [mm] |

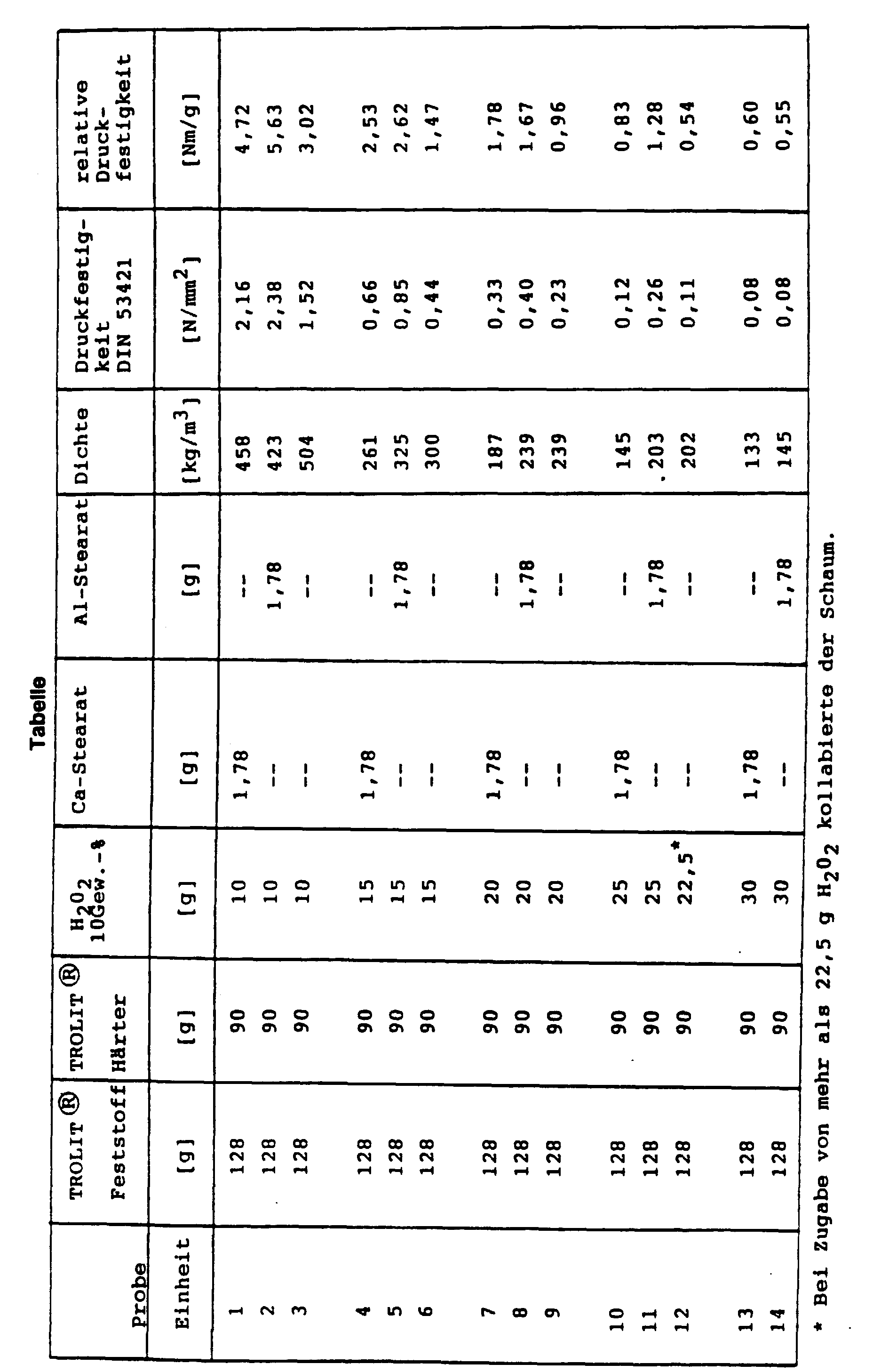

## Patentansprüche

1. Formmasse oder aus mehreren Teilen bestehende Zusammenstellung der Komponenten zur Herstellung eines festen, geschlossenporigen Schaumproduktes,
- mit einer anorganischen, steinbildenden Komponente,
- einer wasserhaltigen zweiten Komponente, die die Härtungsreaktion der steinbildenden Komponente im alkalischen Bereich bewirkt,
- sowie mit einer schaumbildenden Komponente,
***gekennzeichnet durch*** den Zusatz einer oberflächenaktiven, amphiphilen Substanz in einer zur Beeinflussung der Porenstruktur und/oder Festigkeit ausreichenden Menge.

2. Formmasse oder aus mehreren Teilen bestehende Zusammenstellung der Komponenten zur Herstellung eines festen Schaumproduktes mit einer relativen Druckfestigkeit > 0,55 [Nm/g],
- mit einer anorganischen, steinbildenden Komponente,
- einer wasserhaltigen zweiten Komponente, die die Härtungsreaktion der steinbildenden Komponente im alkalischen Bereich bewirkt,
- sowie mit einer schaumbildenden Komponente,
***gekennzeichnet durch*** den Zusatz einer oberflächenaktiven, amphiphilen Substanz in einer zur Beeinflussung der Porenstruktur und/oder Festigkeit ausreichenden Menge.

3. Formmasse oder Zusammenstellung nach Anspruch 1 oder 2, ***dadurch gekennzeichnet,*** daß als amphiphile Substanz 0,1-5 Gew.-%, bezogen auf die Formmasse, eines Stearats aus der Gruppe Zink-, Magnesium-, Kalzium- und Aluminiumstearat eingesetzt wird.

4. Formmasse oder Zusammenstellung nach einem der Ansprüche 1 bis 3, ***dadurch gekennzeichnet,*** daß die steinbildende Komponente einen oder mehrere reaktionsfähige Feststoffe aus der Gruppe
I feinteiliges, wenigstens teilweise amorphes Alumosilikat mit Gehalten von amorphem Siliziumdioxid und Aluminiumoxid,
II glasartige, amorphe Elektrofilterasche,
III gemahlener kalzinierter Bauxit,
IV Elektrofilterasche aus Braunkohlekraftwerken,
V ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
VI Metakaolin
enthält.

5. Formmasse oder Zusammenstellung nach einem der Ansprüche 1 bis 4, ***dadurch gekennzeichnet,*** daß als wasserhaltige zweite Komponente (Härter) eine Alkalisilikatlösung mit 1,2 bis 2,5 Mol SiO₂ je Mol K₂O und/oder Na₂O eingesetzt wird.

6. Formmasse oder Zusammenstellung nach einem der Ansprüche 1 bis 5, ***gekennzeichnet durch*** einen Füllstoffgehalt von 5 bis 100 Gew.-Teilen je 100 Gew.-Teile der steinbildenen Komponente.

7. Formmasse oder Zusammenstellung nach Anspruch 5, ***dadurch gekennzeichnet,*** daß 0,4 - 4,0 Gew.-Teile der steinbildenen Komponente je Gew.-Teil der Alkalisilikatlösung enthalten sind.

8. Verfahren zur Herstellung eines feinporigen, festen, geschlossenporigen Schaumproduktes, ***gekennzeichnet durch*** die Verwendung einer oberflächenaktiven, amphiphilen Substanz in einer zur Beeinflussung der Porenstruktur und/oder Festigkeit ausreichenden Menge in einer Formmasse, enthaltend eine anorganische, steinbildende Komponente, eine wasserhaltige zweite Komponente, die die Härtungsreaktion der steinbildenden Komponente im alkalischen Bereich bewirkt, und eine schaumbildende Komponente.

9. Verfahren zur Herstellung eines feinporigen, festen Schaumproduktes mit einer relativen Druckfestigkeit > 0,55 [Nm/g], ***gekennzeichnet durch*** die Verwendung einer oberflächenaktiven, amphiphilen Substanz in einer zur Beeinflussung der Porenstruktur und/oder Festigkeit ausreichenden Menge in einer Formmasse, enthaltend eine anorganische, steinbildende Komponente, eine wasserhaltige zweite Komponente, die die Härtungsreaktion der steinbildenden Komponente im alkalischen Bereich bewirkt, und eine schaumbildende Komponente.

10. Verfahren nach Anspruch 9, ***gekennzeichnet durch*** die zusätzliche Verwendung einer organischen, sich im alkalischen Bereich zersetzenden Substanz in einer die Offenporigkeit beeinflussenden Menge.

11. Feinporiges Schaumprodukt, hergestellt durch ein Verfahren nach einem der Ansprüche 8 bis 10, ***gekennzeichnet durch*** eine Dichte < 200 [kg/m³], einer relativen Druckfestigkeit > 0,55 [Nm/g] und einem mittleren Porendurchmesser < 1,5 [mm].

12. Verwendung einer oberflächenaktiven, amphiphilen Substanz in einer Formmasse zur Herstellung eines festen, geschlossenporigen Schaumproduktes, wobei die Formmasse
- eine anorganische, steinbildende Komponente,
- eine wasserhaltige zweite Komponente, die die Härtungsreaktion der steinbildenden Komponente im alkalischen Bereich bewirkt,
- sowie eine schaumbildende Komponente
enthält, als Zusatz zur Beeinflussung der Festigkeit des aus der Formmasse hergestellten Schaumproduktes.

13. Verwendung einer oberflächenaktiven, amphiphilen Substanz in einer Formmasse zur Herstellung eines festen Schaumproduktes mit einer relativen Druckfestigkeit > 0,55 [Nm/g], wobei die Formmasse
- eine anorganische, steinbildende Komponente,
- eine wasserhaltige zweite Komponente, die die Härtungsreaktion der steinbildenden Komponente im alkalischen Bereich bewirkt,
- sowie eine schaumbildende Komponente
enthält, als Zusatz zur Beeinflussung der Festigkeit des aus der Formmasse hergestellten Schaumproduktes.

## Claims

1. Moulding composition, or combination of components consisting of several parts, for the preparation of a solid closed pore foam product,
- containing an inorganic, rock-forming component,
- an aqueous second component, which effects the curing reaction of the rock-forming component in the alkaline range,
- as well as containing a foam-forming component,
characterised by the addition of a surface-active, amphiphilic substance in an amount sufficient to influence the pore structure and/or strength.

2. Moulding composition or combination of components consisting of several parts, for the production of a solid foam product with a relative resistance to pressure >0.55 [Nm/g],
- containing an inorganic rock-forming component.
- an aqueous second component, which effects the curing reaction of the rock-forming component in the alkaline range,
- as well as containing a foam-containing component,
characterised by the addition of a surface active amphiphilic substance in an amount sufficient to influence the pore structure and/or strength.

3. Moulding composition or combination according to claim 1 or 2, characterised in that 0.1 - 5% by weight related to the moulding composition of a stearate from the group zinc, magnesium, calcium and aluminium stearate is employed as amphiphilic substance.

4. Moulding composition or combination according to one of claims 1 to 3, characterised in that the rock-forming component contains one or several reactive solids from the group comprising
I finely divided, at least partially amorphous alumosilicate containing amorphous silicon dioxide and aluminium oxide,
II glassy, amorphous electrostatic filter ash,
III ground, calcined bauxite,
IV electrostatic filter ash from lignite-fired power stations,
V undissolved, amorphous SiO₂, in particular composed of an amorphous, dispersepulverulent, dehydrated or water-containing silica or obtained from high-temperature processes (silica fume), and
VI metakaolin.

5. Moulding composition or combination according to one of claims 1 to 4, characterised in that the aqueous second component (curing agent) used is an alkali metal silicate solution containing 1.2 to 2.5 mol of SiO₂ per mol of K₂O and/or Na₂O.

6. Moulding composition or combination according to one of claims 1 to 5, characterised by a filler content of from 5 to 100 parts by weight per 100 parts by weight of the rock-forming component.

7. Moulding composition or combination according to claim 5, characterised in that it contains 0.4 - 4.0 parts by weight of the rock-forming component per part by weight of the alkali metal silicate solution.

8. Process for the preparation of a fine-pored, solid foam product, characterised by the use of a surface-active, amphiphilic substance, in an amount sufficient to influence the pore structure and/or strength, in a moulding composition containing an inorganic, rock-forming component, an aqueous second component, which effects the curing reaction of the rock-forming component in the alkaline range, and a foam-forming component.

9. Process for the production of a fine-pored, solid foam product with a relative compressive strength of >0.55 [Nm/g], characterised by the use of a surfaceactive, amphiphilic substance, in an amount sufficient to influence the pore structure and/or strength, in a moulding composition containing an inorganic, rock-forming component, an aqueous second component, which effects the curing reaction of the rock-forming component in the alkaline range, and a foam-forming component.

10. Process according to claim 9, characterised by the additional use of an organic substance which decomposes in the alkaline range in an amount which influences the open-pore nature.

11. Fine-pored foam product prepared by a process according to one of claims 8 to 10, characterised by a density of <200 [kg/m³], a relative compressive strength of >0.55 [Nm/g] and an average pore diameter of <1.5 [mm].

12. Use of a surface-active, amphiphilic substance in a moulding composition for the preparation of a solid foam product, the moulding composition containing
- an inorganic, rock-forming component,
- an aqueous second component, which effects the curing reaction of the rock-forming component in the alkaline range,
- and a foam-forming component,
as additive to influence the strength of the foam product prepared from the moulding composition.

13. Use of a surface active, amphiphilic substance in a moulding composition for the preparation of a solid foam product having a relative compressive strength >0.55[Nm/g], the moulding composition containing
- an inorganic, rock-forming component,
- an aqueous second component, which effects the curing reaction of the rock-forming component in the alkaline range,
- and a foam-forming component,
as additive to influence the strength of the foam product prepared from the moulding composition.

## Revendications

1. Matière moulable ou composition de composants constituée de plusieurs parties, destinée à la préparation d'un produit-mousse solide à cellules fermées, et comportant :
- un composant inorganique pétrogène,
- un deuxième composant hydraté qui, en milieu alcalin, provoque la réaction de durcissement du composant pétrogène, et
- un composant porogène,
caractérisée en ce qu'on y a ajouté une substance tensioactive amphiphile en une quantité suffisante pour influencer la structure des cellules et/ou la résistance mécanique du produit.

2. Matière moulable ou composition de composants constituée de plusieurs parties, destinée à la préparation d'un produit-mousse solide à cellules fermées dont la résistance relative à la compression vaut plus de 0,55 N.m/g, et comportant :
- un composant inorganique pétrogène,
- un deuxième composant hydraté qui, en milieu alcalin, provoque la réaction de durcissement du composant pétrogène, et
- un composant porogène,
caractérisée en ce qu'on y a ajouté une substance tensioactive amphiphile en une quantité suffisante pour influencer la structure des cellules et/ou la résistance mécanique du produit.

3. Matière moulable ou composition conforme à la revendication 1 ou 2, caractérisée en ce que l'on utilise, en tant que substance amphiphile, de 0,1 à 5 % en poids, par rapport à la matière moulable, d'un stéarate choisi parmi les stéarates de zinc, de magnésium, de calcium et d'aluminium.

4. Matière moulable ou composition conforme à l'une des revendications 1 à 3, caractérisée en ce que le composant pétrogène contient une ou plusieurs matières solides réactives choisies parmi I) un aluminosilicate au moins partiellement amorphe, en fines particules et contenant certaines quantités de dioxyde de silicium amorphe et d'oxyde d'aluminium,
II) des cendres d'électrofiltre, amorphes et vitreuses,
III) de la bauxite calcinée et broyée,
IV) des cendres d'électrofiltre provenant de centrales fonctionnant au lignite,
V) de la silice amorphe non-dissoute, en particulier issue d'un acide silicique amorphe, hydraté ou déshydraté, dispersé en poudre, ou issue de procédés fonctionnant à haute température (silice fumée), et
VI) du métakaolin.

5. Matière moulable ou composition conforme à l'une des revendications 1 à 4, caractérisée en ce que l'on utilise, en tant que deuxième composant hydraté (durcisseur), une solution de silicate de. métal alcalin contenant de 1,2 à 2,5 moles de SiO₂ par mole de K₂O et/ou Na₂O.

6. Matière moulable ou composition conforme à l'une des revendications 1 à 5, caractérisée en ce qu'elle contient de 5 à 100 parties en poids de charges pour 100 parties en poids de composant pétrogène.

7. Matière moulable ou composition conforme à la revendication 5, caractérisée en ce qu'elle contient de 0,4 à 4,0 parties en poids de composant pétrogène pour 1 partie en poids de solution de silicate de métal alcalin.

8. Procédé de préparation d'un produit-mousse solide à fines cellules fermées, caractérisé en ce que l'on emploie une substance tensioactive amphiphile, en une quantité suffisante pour influencer la structure des cellules et/ou la résistance mécanique du produit, dans une masse moulable contenant un composant inorganique pétrogène, un deuxième composant hydraté qui, en milieu alcalin, provoque la réaction de durcissement du composant pétrogène, et un composant porogène.

9. Procédé de préparation d'un produit-mousse solide à fines cellules fermées, dont la résistance relative à la compression vaut plus de 0,55 N.m/g, caractérisé en ce que l'on emploie une substance tensioactive amphiphile, en une quantité suffisante pour influencer la structure des cellules et/ou la résistance mécanique du produit, dans une masse moulable contenant un composant inorganique pétrogène, un deuxième composant hydraté qui, en milieu alcalin, provoque la réaction de durcissement du composant pétrogène, et un composant porogène.

10. Procédé conforme à la revendication 9, caractérisé en ce que l'on utilise en outre, en une quantité qui influence le caractère ouvert des cellules, une substance organique qui se décompose en milieu alcalin.

11. Produit-mousse à cellules fines, préparé selon un procédé conforme à l'une des revendications 8 à 10, caractérisé en ce que sa masse volumique est inférieure à 200 kg/m³, sa résistance relative à la compression est supérieure à 0,55 N.m/g, et le diamètre moyen de ses cellules est inférieur à 1,5 mm.

12. Utilisation d'une substance tensioactive amphiphile, dans une matière moulable, destinée à la préparation d'un produit-mousse solide à cellules fermées, et qui comporte
- un composant inorganique pétrogène,
- un deuxième composant hydraté qui, en milieu alcalin, provoque la réaction de durcissement du composant pétrogène, et
- un composant porogène,
comme adjuvant permettant d'influencer la résistance mécanique du produit-mousse préparé à partir de la matière moulable.

13. Utilisation d'une substance tensioactive amphiphile, dans une matière moulable, destinée à la préparation d'un produit-mousse solide dont la résistance relative à la compression vaut plus de 0,55 N.m/g, et qui comporte :
- un composant inorganique pétrogène,
- un deuxième composant hydraté qui, en milieu alcalin, provoque la réaction de durcissement du composant pétrogène, et
- un composant porogène,
comme adjuvant permettant d'influencer la résistance mécanique du produit-mousse préparé à partir de la matière moulable.
